Europäisches Patentamt

European Patent Office

Office européen des brevets

(19)

(11) Numéro de publication : **0 058 109**
**B1**

(12) **FASCICULE DE BREVET EUROPÉEN**

(45) Date de publication du fascicule du brevet :
24.04.85

(51) Int. Cl.⁴ : **F 28 C   1/12**

(21) Numéro de dépôt : 82400157.2

(22) Date de dépôt : 28.01.82

(54) **Procédé pour éviter en période froide la formation de glace à l'intérieur d'un réfrigérant atmosphérique à ruissellement et réfrigérant atmosphérique en comportant application.**

(30) Priorité : 11.02.81 FR 8102664

(43) Date de publication de la demande :
18.08.82 Bulletin 82/33

(45) Mention de la délivrance du brevet :
24.04.85 Bulletin 85/17

(84) Etats contractants désignés :
AT BE CH DE FR GB IT LI LU NL SE

(56) Documents cités :
DE-A- 2 748 331
DE-A- 2 901 156
FR-A- 1 065 807
FR-A- 1 475 491
GB-A-   827 971
US-A- 3 117 170

(73) Titulaire : HAMON-SOBELCO S.A. Société dite:
50-58, Rue Capouillet
B-1060 Bruxelles (BE)

(72) Inventeur : Bosne, Jacques Georges Paul Eugène
5 Rue des Sables
F-78220 Viroflay (FR)

(74) Mandataire : Moncheny, Michel et al
c/o Cabinet Lavoix 2 Place d'Estienne d'Orves
F-75441 Paris Cedex 09 (FR)

Description

**Description**

La présente invention concerne les installations de refroidissement d'un liquide par un gaz et plus particulièrement les réfrigérants atmosphériques à ruissellement dans lesquels des eaux industrielles sont refroidies par de l'air atmosphérique.

Ces installations se présentent généralement sous la forme de tours dans lesquelles l'eau à refroidir est mise en contact dans un dispositif à ruissellement avec de l'air atmosphérique entrant par des orifices inférieurs sensiblement verticaux.

En période de gel, il se forme, au niveau des entrées d'air, de la glace sur ces dispositifs de ruissellement et le poids de cette glace peut entraîner la rupture de ces dispositifs de ruissellement.

Il convient donc d'éviter la formation de glace à l'intérieur des réfrigérants atmosphériques à ruissellement.

A cet effet, la Demanderesse a déjà proposé, dans son brevet FR-A-2 266 134, une installation comportant deux circuits de distribution de l'eau à refroidir et qui permet, en période de gel, de n'alimenter que les parties du dispositif de ruissellement qui sont au voisinage de l'entrée d'air. Une telle installation nécessite toutefois deux circuits de distribution et un système de vannes permettant de passer de l'alimentation de tout le dispositif de ruissellement à l'alimentation des seules parties périphériques.

La présente invention vise à éviter la formation de glace à l'intérieur de réfrigérants atmosphériques de façon plus simple et moins onéreuse.

Un tableau de différentes méthodes connues pour éviter les dégâts provoqués par le gel dans les tours de réfrigération est par ailleurs décrit dans DE-A-2 901 156. Ce document mentionne notamment l'utilisation d'un treillis sur lequel on pulvérise de l'eau qui gèle. Cette technique utilise une régulation naturelle avec des temps de réponse totalement inadaptés.

La présente invention vise à fournir un procédé permettant de réguler de façon commandée le débit d'air entrant à l'intérieur d'un réfrigérant atmosphérique.

A cet effet, la présente invention a pour objet un procédé pour réguler en période froide le débit d'air entrant à l'intérieur d'un réfrigérant atmosphérique à ruissellement comportant des orifices d'entrée d'air inférieurs, afin d'éviter la formation de glace à l'intérieur dudit réfrigérant, caractérisé en ce que l'on munit lesdits orifices d'entrée d'air de treillis métalliques verticaux s'étendant sur une partie desdits orifices depuis le haut desdits orifices, on fait ruisseler en période de gel sur lesdits treillis de l'eau froide de façon à former de manière contrôlée sur lesdits treillis des rideaux de glace obturant partiellement lesdits orifices et, lorsque la température de l'air et, par suite, la température de l'eau refroidie à l'intérieur du réfrigérant, redeviennent suffisamment élevées, on fait fondre les rideaux de glace ainsi formés.

La présente invention a également pour objet un réfrigérant atmosphérique à ruissellement comportant des orifices d'entrée d'air inférieurs, caractérisé en ce qu'il comprend des treillis métalliques verticaux s'étendant sur une partie desdits orifices d'entrée d'air, depuis le haut desdits orifices, des moyens pour faire ruisseler en période de gel sur lesdits treillis de l'eau froide de façon à former de manière contrôlée sur lesdits treillis des rideaux de glace obturant partiellement lesdits orifices et des moyens pour faire fondre la glace formée sur lesdits treillis.

Ainsi, selon la présente invention, en période de gel on crée volontairement un rideau de glace qui obture sur une hauteur déterminée les orifices d'entrée d'air froid. La hauteur peut être réglée, d'une part, par la hauteur des treillis métalliques et, d'autre part, par la quantité d'eau qui est congelée sur les treillis. En effet, le rideau de glace peut descendre à un niveau nettement inférieur à celui des treillis à condition de faire ruisseler sur les treillis une quantité suffisante d'eau froide. Ceci permet de régler le volume d'air entrant en fonction de sa température.

Dès que la température de l'air et, par suite, la température de l'eau refroidie à l'intérieur du réfrigérant sont suffisamment élevées pour éviter la formation de glace sur les dispositifs de ruissellement, il convient alors pour obtenir un fonctionnement optimal, d'accroître l'entrée de l'air atmosphérique et l'on fait fondre la glace. Ceci peut être obtenu par ruissellement d'eau chaude, en grande quantité, sur les rideaux de glace. Ceci constitue une solution particulièrement avantageuse dans une telle installation où l'eau chaude est précisément le produit à traiter.

On peut toutefois accélérer la fusion des rideaux de glace à l'aide de moyens de chauffage fixés sur les treillis métalliques ou constituant au moins certains éléments de ces treillis. Dans un mode de réalisation préféré, on dispose ces moyens de chauffage à l'extrémité inférieure de chaque treillis métallique de façon à détacher rapidement la glace se trouvant sous ce treillis. Ces moyens de chauffage peuvent consister en des résistances électriques, ou des conduits de vapeur ou d'eau chaude.

L'invention est exposée ci-après plus en détail à l'aide de dessins représentant seulement un mode d'exécution.

Sur ces dessins :

la Figure 1 est une vue en coupe représentant l'entrée d'un réfrigérant atmosphérique comportant un dispositif pour la mise en œuvre de la présente invention ;

la Figure 2 est une vue en perspective à plus grande échelle du treillis métallique représenté sur la Fig. 1 ; et

la Figure 3 est une vue en coupe représentant l'entrée du réfrigérant atmosphérique partiellement obturée par un rideau de glace.

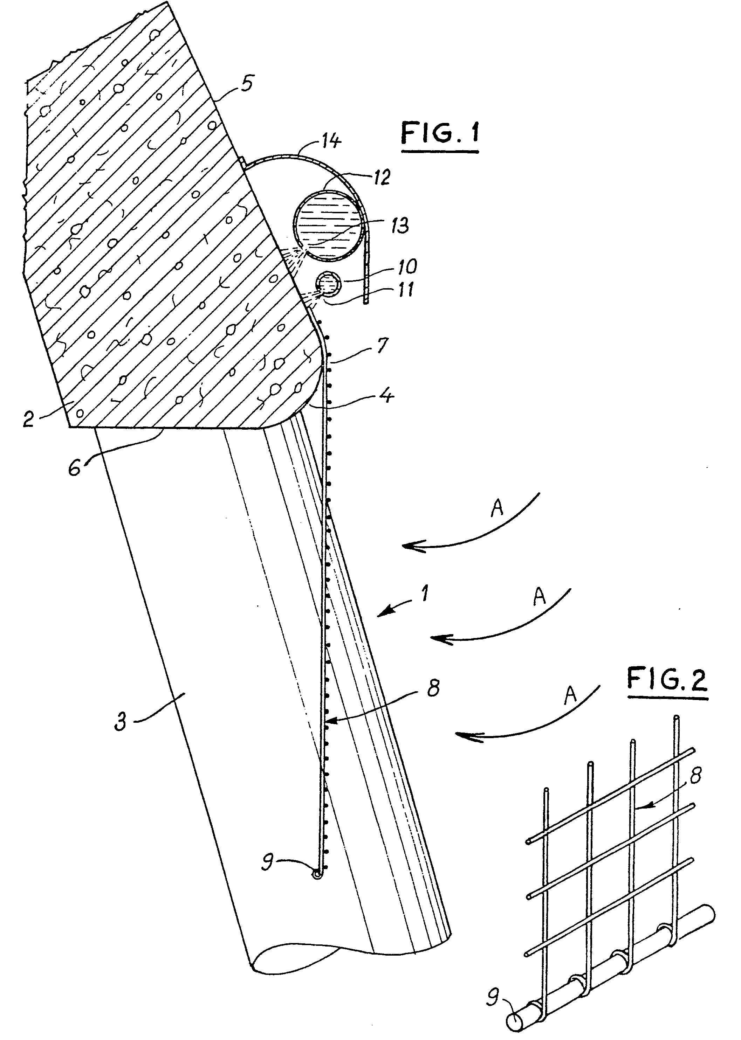

Un orifice d'entrée d'air 1 d'une tour de réfrigération atmosphérique qui est disposé à la périphérie de cette tour, à sa partie inférieure, et qui est représenté partiellement sur la Fig. 1 est délimité par un linteau 2 en béton, des traverses diagonales telles que 3 supportant le linteau et une base non représentée.

Le linteau comporte un bord inférieur extérieur arrondi 4 raccordant la paroi inclinée extérieure 5 de la tour à la paroi horizontale inférieure 6 du linteau. A la partie supérieure de ce bord arrondi 4 est fixée l'extrémité supérieure 7 d'un treillis métallique 8 qui est ainsi suspendu au linteau 2 à l'extérieur de la tour de réfrigération et qui s'étend entre deux traverses diagonales telles que 3.

Ce treillis métallique est constitué de barreaux métalliques (d'un diamètre par exemple de 6 ou 8 mm) qui, comme représenté sur la Fig. 2, sont disposés les uns horizontalement, les autres verticalement, de façon à former des mailles carrées. Ces mailles peuvent par exemple avoir une dimension de 50 à 100 mm.

A l'extrémité inférieure du treillis 8 est fixée une résistance électrique 9 raccordée à une source de courant non représentée.

Juste au-dessus de l'extrémité supérieure 7 du treillis métallique 8 est disposée une canalisation 10 d'amenée d'eau froide munie de buses de pulvérisation 11 dirigées vers la paroi inclinée extérieure 5.

Au-dessus de la canalisation 10 est disposée une canalisation 12 d'amenée d'eau chaude. Cette canalisation 12 de gros diamètre est munie comme la canalisation 10 de buses de pulvérisation 13 dirigées vers la paroi inclinée extérieure 5. Les canalisations 10 et 12 sont protégées par un carter 14 qui peut être calorifugé.

Le fonctionnement de cette installation est le suivant.

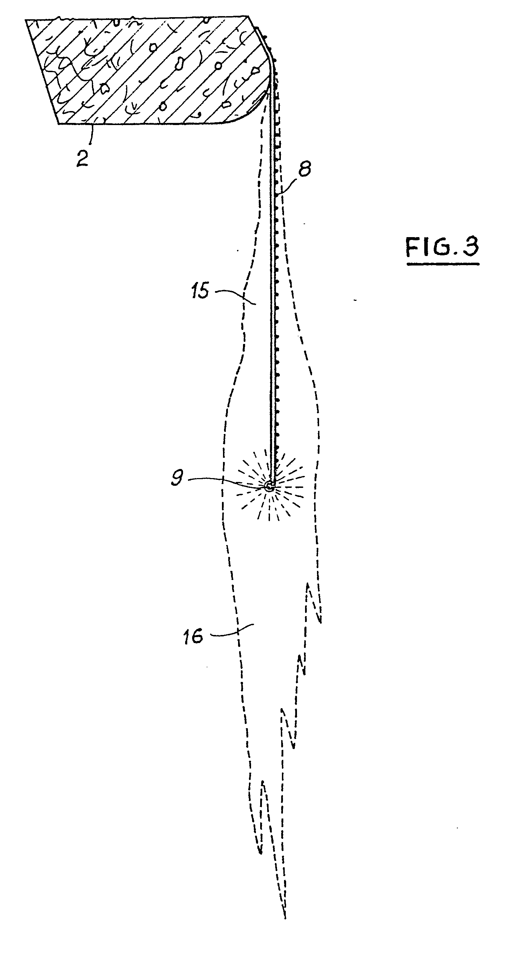

Lorsque la température de l'air atmosphérique (entrant dans la tour comme représenté par les flèches A sur la Fig. 1) est telle qu'il y ait un risque de formation de glace sur les surfaces de ruissellement à l'intérieur de la tour, on pulvérise par les buses 11 de la canalisation 10 de l'eau froide. Il se forme progressivement sur le treillis métallique 8 un rideau de glace 15, comme représenté sur la Fig. 3. Ce rideau peut non seulement recouvrir le treillis métallique 8, mais s'étendre sous ce treillis en 16, comme représenté sur la Fig. 3, si la quantité d'eau pulvérisée par les buses 11 est suffisante.

On ferme ainsi partiellement les orifices d'entrée d'air dans le réfrigérant atmosphérique, ce qui a pour effet de diminuer le débit d'air entrant dans le réfrigérant et donc d'éviter une température trop basse dans le dispositif de ruissellement au voisinage des entrées d'air, qui aurait normalement conduit à la formation de glace à ces endroits.

Lorsque la température de l'air, et par suite celle de l'eau refroidie à l'intérieur du réfrigérant redeviennent suffisamment élevées, on pulvérise de l'eau chaude par les buses 13 de la canalisation 12 avec un gros débit. Simultanément, on fait passer un courant électrique dans la résistance 9 de façon à provoquer la fonte de la glace au niveau de cette résistance 9 et la rupture du rideau de glace à ce niveau sous le poids de la partie inférieure 16 du rideau de glace. On obtient ainsi un dégagement très rapide d'une partie de l'orifice d'entrée de l'air atmosphérique. Puis progressivement l'eau chaude ruisselant sur le rideau de glace fait fondre le reste de la glace.

**Revendications**

1. Procédé pour réguler en période froide le débit d'air entrant à l'intérieur d'un réfrigérant atmosphérique à ruissellement comportant des orifices d'entrée d'air inférieurs, afin d'éviter la formation de glace à l'intérieur dudit réfrigérant, caractérisé en ce que l'on munit lesdits orifices d'entrée d'air de treillis métalliques verticaux s'étendant sur une partie desdits orifices depuis le haut desdits orifices, on fait ruisseler en période de gel sur lesdits treillis de l'eau froide de façon à former de manière contrôlée sur lesdits treillis des rideaux de glace obturant partiellement lesdits orifices et, lorsque la température de l'air et, par suite, la température de l'eau refroidie à l'intérieur du réfrigérant redeviennent suffisamment élevées, on fait fondre les rideaux de glace ainsi formés.

2. Procédé selon la revendication 1, caractérisé en ce que l'on fait fondre la glace par ruissellement d'eau chaude sur les rideaux de glace.

3. Procédé selon la revendication 2, caractérisé en ce que l'on accélère la fusion des rideaux de glace à l'aide de moyens de chauffage fixés sur lesdits treillis ou constituant au moins certains éléments desdits treillis.

4. Procédé selon la revendication 3, caractérisé en ce que l'on dispose des moyens de chauffage à l'extrémité inférieure desdits treillis métalliques.

5. Réfrigérant atmosphérique à ruissellement comportant des orifices (1) d'entrée d'air inférieurs pour la mise en œuvre du procédé selon l'une quelconque des revendications 1 à 4, caractérisé en ce qu'il comprend des treillis métalliques (8) verticaux s'étendant sur une partie desdits orifices (1) d'entrée d'air, depuis le haut desdits orifices, des moyens (10, 11) pour faire ruisseler en période de gel sur lesdits treillis de l'eau froide de façon à former de manière contrôlée sur lesdits treillis des rideaux de glace obturant partiellement lesdits orifices et des moyens (12, 13, 9) pour faire fondre la glace formée sur lesdits treillis.

6. Réfrigérant atmosphérique selon la revendication 5, caractérisé en ce que les moyens (12, 13) pour faire ruisseler de l'eau chaude sur la glace.

7. Réfrigérant selon la revendication 6, caractérisé en ce que les moyens pour faire fondre la glace comprennent en outre des moyens de chauffage (9) fixés sur lesdits treillis métalliques ou constituant au moins certains éléments desdits treillis.

8. Réfrigérant selon la revendication 7, caractérisé en ce que les moyens de chauffage (9) sont disposés à l'extrémité inférieure desdits treillis métalliques.

9. Réfrigérant selon la revendication 7 ou la revendication 8, caractérisé en ce que les moyens de chauffage sont des résistances électriques.

## Claims

1. Method for regulating in a cold period the flow of air entering the interior of an atmospheric cooler employing streaming water and having lower air inlet orifices, so as to avoid the formation of ice inside said cooler, characterised in that said air inlet orifices are provided with vertical metal netting extending along a part of said orifices from the top of said orifices, cold water is made to stream in a freezing period along said netting so as to form in a controlled manner on said netting curtains of ice partly closing said orifices and, when the temperature of the air and consequently the temperature of the water cooled inside the cooler become sufficiently high, the curtains of ice formed are melted.

2. A method according to claim 1, characterised in that the ice is melted by causing hot water to stream along the curtains of ice.

3. A method according to claim 2, characterised in that the melting of the curtains of ice is accelerated by heating means fixed to said netting or constituting at least some of the elements of said netting.

4. A method according to claim 3, characterised in that heating means are provided at the lower end of said metal netting.

5. An atmospheric cooler employing streaming water and having lower air inlet orifices (1) for carrying out the method according to any one of the claims 1 to 4, characterised in that it comprises vertical metal netting elements (8) extending along a part of said air inlet orifices (1), from the top of said orifices, means (10, 11) for causing in a freezing period cold water to stream along said netting elements so as to form in a controlled manner on said netting elements curtains of ice which partly close said orifices, and means (12, 13, 9) for melting the ice formed on said netting elements.

6. An atmospheric cooler according to claim 5, characterised in that the means for melting the ice comprise means (12, 13) for causing hot water to stream along the ice.

7. A cooler according to claim 6, characterised in that the means for melting the ice further comprise heating means (9) fixed to said metal netting elements for constituting at least some of the members of said netting elements.

8. A cooler according to claim 7, characterised in that the heating means (9) are disposed at the lower end of said metal netting elements.

9. A cooler according to claim 7 or claim 8, characterised in that the heating means are electric resistances.

## Patentansprüche

1. Während einer Kälteperiode durchzuführendes Verfahren zum Steuern der Luftmenge, die in das Innere einer atmosphärischen Rieselkühlanlage strömt, welche untere Lufteintritts-Öffnungen besitzt, zur Vermeidung der Eisbildung im Innern der Anlage, dadurch gekennzeichnet, daß man die Lufteintritts-Öffnungen mit metallischen, vertikalen Gittern versieht, die sich über einen Teil der Öffnungen von deren oberen Enden her erstrecken, daß man während einer Frostperiode über die Gitter kaltes Wasser laufen läßt, so daß sich in kontrollierter Form auf den Gittern Eiswände bilden, die teilweise die Öffnungen verschließen, und daß man, wenn die Lufttemperatur und damit die Temperatur des gekühlten Wassers im Innern der Kühlanlage wieder hinreichend hoch ist, die Eiswände schmilzt.

2. Verfahren nach Anspruch 1, dadurch gekennzeichnet, daß man das Eis dadurch schmilzt, daß man warmes Wasser über die Eiswände laufen läßt.

3. Verfahren nach Anspruch 2, dadurch gekennzeichnet, daß man das Schmelzen der Eiswände mit Hilfe von Heizorganen beschleunigt, die fest an den Gittern sitzen oder mindestens Teile der Gitter bilden.

4. Verfahren nach Anspruch 3, dadurch gekennzeichnet, daß man Heizorgane am unteren Ende der metallischen Gitter anbringt.

5. Atmosphärische Rieselkühlanlage mit unteren Lufteintritts-Öffnungen zur Durchführung des Verfahrens nach einem der Ansprüche 1 bis 4, dadurch gekennzeichnet, daß sich vertikale metallische Gitter (8) über einen Teil der Lufteintritts-Öffnungen (1) von deren oberen Enden her erstrecken, daß Organe (10, 11) vorgesehen sind, um während einer Kälteperiode über die Gitter kaltes Wasser fließen lassen zu können, so daß in kontrollierter Form auf den Gittern Eiswände entstehen, die teilweise die Öffnungen verschließen, und daß Organe (12, 13, 9) vorgesehen sind, mittels derer das Eis auf den Gittern wieder geschmolzen werden kann.

6. Anlage nach Anspruch 5, dadurch gekennzeichnet, daß die Organe zum Schmelzen des Eises Organe (12, 13) umfassen, mittels derer warmes Wasser über das Eis fließen kann.

7. Anlage nach Anspruch 6, dadurch gekennzeichnet, daß die Organe zum Schmelzen des Eises überdies Heizorgane (9) umfassen, die auf dem metallischen Gitter befestigt sind oder mindestens einen Teil desselben bilden.

8. Anlage nach Anspruch 7, dadurch gekennzeichnet, daß die Heizorgane (9) am unteren Ende der metallischen Gitter sitzen.

9. Anlage nach Anspruch 7 oder 8, dadurch gekennzeichnet, daß die Heizorgane aus elektrischen Widerständen bestehen.

FIG.1

FIG.2

0 058 109

FIG.3

2